# EUROPÄISCHE PATENTANMELDUNG

(11) **EP 4 325 079 A1**
(43) Veröffentlichungstag der Anmeldung: **21.02.2024**
(21) Anmeldenummer: 22190925.2
(22) Anmeldetag: 18.08.2022
(51) Int. Cl.: F16D 65/00, F16D 65/847

(54) **SCHEIBENBREMSE FÜR EIN NUTZFAHRZEUG UND NUTZFAHRZEUG MIT EINER SOLCHEN SCHEIBENBREMSE**

(71) Anmelder: ZF CV Systems Europe BV, 1170 Brüssel (BE)
(72) Erfinder: HENNING, Paul, 68723 Schwetzingen (DE)
(74) Vertreter: Copi, Joachim

(57) **Zusammenfassung**

Scheibenbremse (10, 60), insbesondere pneumatischen Scheibenbremse (10, 60), für ein Nutzfahrzeug (100), aufweisend mindestens eine Bremsscheibe (18), und eine Bremssattelanordnung (24) mit einem Bremssattel (26), wobei die Bremssattelanordnung (24) einen Innenraum (28) bereitstellt, in dem die Bremsscheibe (18) angeordnet ist, und wobei die Bremssattelanordnung (24) eine Lufteinlassöffnung (44) und eine Luftauslassöffnung (46) aufweist, die durch den Innenraum (28) luftleitend verbunden sind, eine Abgabe von Bremsstaub an die Umwelt effizient zu verhindern und gleichzeitig eine besonders effiziente Kühlung der Bremsscheibe und der Bremsbeläge zu gewährleisten, ist die Lufteinlassöffnung (44) eingerichtet, um dem Innenraum (28) komprimierte Luft aus einem pneumatischen System (108) des Nutzfahrzeugs (100) zuzuführen.

## Beschreibung

Die Erfindung betrifft eine Scheibenbremse, insbesondere eine pneumatische Scheibenbremse, für ein Nutzfahrzeug, aufweisend mindestens eine Bremsscheibe, und eine Bremssattelanordnung mit einem Bremssattel, wobei die Bremssattelanordnung einen Innenraum bereitstellt, in dem die Bremsscheibe angeordnet ist, und wobei die Bremssattelanordnung eine Lufteinlassöffnung und eine Luftauslassöffnung aufweist, die durch den Innenraum luftleitend verbunden sind. Des Weiteren betrifft die Erfindung auch ein Nutzfahrzeug mit der Scheibenbremse.

Scheibenbremsen der vorbezeichneten Art sind bekannt und werden in Nutzfahrzeugen als Reibbremse zum Verzögern der Bewegung des Nutzfahrzeuges eingesetzt. Reibbremsen funktionieren nach dem Reibungsprinzip. Dabei werden von einem Bremssattel getragene Bremsbeläge mit einer Bremsscheibe in Reibwirkung gebracht, um eine Bremswirkung auf das Fahrzeug zu erzeugen. Durch die Reibung zwischen den Bremsbelägen und der Bremsscheibe entsteht ein Abrieb an den Reibstoffen der Bremsbeläge und an der Bremsscheibe, der Bremsstaub. Bremsstaubpartikel sind Staubpartikel in einer Größenordnung von beispielsweise kleiner 10 µm, sogenannter Feinstaub, der aufgrund seiner geringen Partikelgröße und seiner chemischen Zusammensetzung als gesundheitsgefährdend und umweltbelastend eingestuft ist. Eine Abgabe des Feinstaubs an die Umwelt ist entsprechend nicht gewünscht. Es ist daher von allgemeinem Interesse, Scheibenbremsen so zu gestalten, dass eine Abgabe des beim Bremsvorgang entstehenden Feinstaubs an die Umwelt möglichst verhindert wird.

Eine Scheibenbremse für ein Nutzfahrzeug ist beispielsweise aus dem Dokument EP 3 835 612 A1 bekannt.

Aus dem Dokument DE 10 2006 051 972 A1 ist eine Scheibenbremse für ein Kraftfahrzeug mit einer Bremsstaubsammelvorrichtung bekannt. Die Bremsstaubsammelvorrichtung ist als ein Gehäuse ausgebildet, welches sich in Rotationsrichtung der Bremsscheibe unmittelbar an den, einen Bereich der Bremsscheibe übergreifenden Bremssattel anschließt und einen begrenzten weiteren Bereich der Bremsscheibe übergreift. Das Gehäuse weist dabei mehrere Lufteinlassöffnungen und davon getrennte Luftauslassöffnungen auf. Darüber hinaus weist das Gehäuse eine Bremsstaubrückhalteeinrichtung mit zusätzlichen Bremsstaubeinlassöffnungen auf. Die physische Trennung der Lufteinlassöffnungen von den Bremsstaubeinlassöffnungen soll ermöglichen, den entstehenden Bremsstaub in die Bremsstaubrückhalteeinrichtung zu lenken. Die durch die Lufteinlassöffnungen einströmende Luft soll zusätzlich zur Kühlung der Bremsscheibe dienen.

Weitere Reibbremsen-Konstruktionen mit Bremsstaubaufnahmevorrichtungen, welche sich über einen begrenzten Winkelabschnitt der Bremsscheibe erstrecken und dem Bremssattel der Reibbremse nachgelagert sind, sind beispielsweise in den Dokumenten DE 10 2009 021 203 A1 und DE 10 2012 016 835 A1 offenbart.

Bei Konstruktionen, bei denen der Bremssattel und eine Bremsstaubaufnahmevorrichtung gemeinsam nur einen begrenzten Bereich der Bremsscheibe übergreifen, liegt jedoch ein großer Bereich der Bremsscheibe frei, sodass nicht gewährleistet werden kann, dass eine Abgabe des Bremsabriebs an die Umwelt vollständig verhindert wird.

Aus dem Dokument DE 10 2016 108 793 A1 ist eine weitere Scheibenbremsenanordnung für Kraftfahrzeuge bekannt, mit einem Bremsengehäuse, welches die Bremsscheibe, mit Ausnahme der vom Bremssattel umfassten Teile der Bremsscheibe, allseits umschließt. Zu Kühlungszwecken ist eine zur Fahrtrichtung hin offene Kühllufteintrittsöffnung vorgesehen.

Eine weitere Reibbremsen-Konstruktion, bei der ein Bremsengehäuse die Scheibenbremsenanordnung komplett umschließt, ist beispielsweise in dem Dokument EP 2 663 784 B1 offenbart. Bei der dort gezeigten Bremsvorrichtung hat die Bremsscheibe darüber hinaus Kühlkanäle, durch welche in das Bremsengehäuse eingetretene Luft zu seitlich angeordneten Luftauslässen geleitet werden soll.

In Konstruktionen, die ein allseitiges Umschließen der Reibbremsen vorsehen, treten höhere Temperaturen auf als in nicht geschlossenen Reibbremsen-Systemen. Daher ist in diesen Konstruktionen eine besonders effiziente Kühlung der Bremsscheibe und der Bremsbeläge von hoher Bedeutung. Kühlungseffekte der Bremsscheibe durch Konvektion von Luft, welche die heiße Bremsscheibe umgibt, oder eine Belüftung durch Kühlungskanäle in der Bremsscheibe sind in solchen geschlossenen Systemen nicht mehr unbedingt ausreichend, um eine hinreichende Kühlung der Bremsscheibe und der Bremsbeläge zu erreichen.

Der Erfindung lag daher die Aufgabe zugrunde, die oben aufgeführten Nachteile möglichst weitgehend zu überwinden. Insbesondere lag der Erfindung die Aufgabe zugrunde, eine Scheibenbremse aufzuzeigen, die eine Abgabe von Bremsstaub an die Umwelt effizient verhindert, einen einfachen Aufbau hat, und gleichzeitig eine besonders effiziente Kühlung der Bremsscheibe und der Bremsbeläge gewährleistet.

Die Erfindung löst die ihr zugrundeliegende Aufgabe bei einer Scheibenbremse für ein Nutzfahrzeug der vorbezeichneten Gattung mit den Merkmalen des Gegenstands von Anspruch 1. Insbesondere ist die Lufteinlassöffnung eingerichtet, um dem Innenraum komprimierte Luft aus einem pneumatischen System des Nutzfahrzeugs zuzuführen.

Gemäß der Erfindung wird eine Scheibenbremse, insbesondere pneumatische Scheibenbremse, für ein Nutzfahrzeug bereitgestellt. Die Scheibenbremse weist mindestens eine Bremsscheibe, und eine Bremssattelanordnung mit einem Bremssattel auf, wobei die Bremssattelanordnung einen Innenraum bereitstellt, in dem die Bremsscheibe angeordnet ist, und wobei die Bremssattelanordnung eine Lufteinlassöffnung und eine Luftauslassöffnung aufweist, die durch den Innenraum luftleitend verbunden sind, wobei die Lufteinlassöffnung eingerichtet ist, um dem Innenraum komprimierte Luft aus einem pneumatischen System des Nutzfahrzeugs zuzuführen.

Der Erfindung liegt die Erkenntnis zugrunde, dass das allseitige Umschließen einer Scheibenbremse ein Problem bei der Abgabe thermischer Energie erzeugt, wobei ein effektiver Kühlungseffekt durch eine aktive Zufuhr von Luft erreicht werden kann. Die aktive Zufuhr von Luft, idealerweise eines Luftstroms, zu Kühlungszwecken der Bremsscheibe und der Bremsbeläge ist entsprechend notwendig und stellt eine deutlich effizientere Kühlungsmethode bereit als die Kühlungsmethode der frei einströmenden Luft, wie sie bei den aus dem Stand der Technik bekannten Konstruktionen mit umschlossenen Bremsscheiben Anwendung findet. Erfindungsgemäß wird die Scheibenbremse mit komprimierter Luft, die einen Druck von ca. 8-10 bar aufweisen kann, aus einem pneumatischen System des Nutzfahrzeugs gekühlt. Dabei wird die komprimierte Luft dem Innenraum der Bremssattelanordnung, in welchem die Bremsscheibe aufgenommen ist, zugeführt. Komprimierte Luft eignet sich besonders gut zu Kühlungszwecken, da hierbei ausgenutzt werden kann, dass sich die Druckluft, die beim Zuführen in den Innenraum dekomprimiert, bei der Dekompression abkühlt (Joule-Thompson Effekt). Der zugeführte Luftstrom kann dabei in vorteilhafter Weise so gelenkt werden, dass er gleichzeitig die Bremsstaubpartikel kontrolliert zu Filterelementen lenkt, welche die Bremsstaubpartikel zurückhalten, oder optional zu Bremsstaubsammelkammern. Auf diese Weise kann drüber hinaus die Notwendigkeit einer zusätzlichen Bremsstaub-Absaugvorrichtung mit externem Speichersystem entfallen.

Die erfindungsgemäße Bremssattelanordnung kann als Festsattelbremse ausgebildet sein. Alternativ ist denkbar, dass die Bremssattelanordnung als Gleitsattelbremse ausgebildet ist. Der von der Bremssattelanordnung bereitgestellte Innenraum, in dem die Bremsscheibe angeordnet ist, kann dazu eingerichtet sein, die Bremsscheibe vollständig aufzunehmen. Die Bremssattelanordnung kann dabei eine erste Seitenfläche haben. Weiter kann die Bremssattelanordnung eine zweite Seitenfläche haben. Die erste Seitenfläche und die zweite Seitenfläche können im Wesentlichen senkrecht zu einer Drehachse der Bremsscheibe verlaufen. Die erste Seitenfläche kann einer Radnabe der Scheibenbremse zugewandt sein, an welcher die Bremsscheibe drehfest lagerbar ist, und eine der Radnabe zugewandte Fläche der Bremsscheibe umgreifen. Die zweite Seitenfläche kann einer Radaufhängung zugewandt sein, und eine der Radaufhängung zugewandte Fläche der Bremsscheibe umgreifen. Weiter kann die Bremssattelanordnung eine Umlauffläche haben. Die Umlauffläche kann eine radiale Außenkante der Bremsscheibe umgreifen. Eine solche Gestaltung der Bremssattelanordnung stellt eine einfache Konstruktion dar und weist einen besonders geringen Raumbedarf auf.

Die Lufteinlassöffnung in der Bremssattelanordnung kann als ein Kanal ausgebildet sein. Vorzugsweise kann die Lufteinlassöffnung als ein zylinderförmiger Kanal ausgebildet sein. Auf diese Weise lässt sich eine optimale Anschlussverbindung bereitstellen. Durch die Lufteinlassöffnung kann die komprimierte Luft aus dem pneumatischen System des Nutzfahrzeugs dem Innenraum der Bremssattelanordnung zugeführt werden. Die Lufteinlassöffnung kann dabei im Bereich der Bremsbeläge angeordnet sein. Insbesondere kann die Lufteinlassöffnung so angeordnet sein, dass die Luft dem Innenraum senkrecht zu einer Drehachse der Bremsscheibe zuführbar ist. Diese Zufuhr-Position stellt eine gute Position dar, um einen möglichst großen Teil der Bremsscheibe effizient zu belüften. Alternativ ist denkbar, dass die Lufteinlassöffnung so angeordnet ist, dass die Luft dem Innenraum axial zu einer Drehachse der Bremsscheibe, also entlang einer Richtung parallel zu der Drehachse, zuführbar ist.

Gemäß einer bevorzugten Weiterbildung weist die Bremssattelanordnung ein an dem Bremssattel montiertes Gehäuseelement auf. Auf diese Weise kann eine schon gefertigte oder montierte Scheibenbremse, beispielsweise mit einer Bremssattelanordnung, welche einen Innenraum bereitstellt, der den Bremssattel nicht vollständig umschließt, auf einfache Weise nachgerüstet werden, um den Innenraum so zu gestalten, dass er die Bremsscheibe vollständig umschließt. Der Bremssattel und das Gehäuseelement können formschlüssig miteinander verbunden sein. Insbesondere können der Bremssattel und das Gehäuseelement miteinander verschraubt sein. Insbesondere kann im Kontaktbereich zwischen dem Bremssattel und dem Gehäuseelement eine Dichtung vorgesehen sein. Auf diese Weise kann ein Austritt von Bremsstaubpartikeln an einer Grenzfläche zwischen dem Bremssattel und dem Gehäuseelement vermieden werden. Das Gehäuseelement kann aus einem leichten Material bestehen. Vorzugsweise kann das Gehäuseelement aus einem hochtemperaturbeständigen Material bestehen. Insbesondere kann das Gehäuseelement aus Metall bestehen. Das Gehäuseelement kann dabei als Blech ausgebildet sein.

Gemäß einer weiteren bevorzugten Ausführungsform bilden der Bremssattel und das Gehäuseelement gemeinsam den Innenraum aus, welcher zur Aufnahme der Bremsscheibe eingerichtet ist. Der Bremssattel umgreift dabei einen ersten Winkelabschnitt der Bremsscheibe und das Gehäuseelement umgreift einen weiteren Winkelabschnitt der Bremsscheibe. Das Gehäuseelement ist dabei dazu eingerichtet, mindestens einen gesamten, nicht von dem Bremssattel umgriffenen Winkelabschnitt der Bremsscheibe zu umgreifen. Auf diese Weise kann die Bremsscheibe vollständig in dem Innenraum aufgenommen werden bzw. der Innenraum die Bremsscheibe vollständig umschließen.

Gemäß einer weiteren bevorzugten Ausführungsform hat das Gehäuseelement einen U-förmigen Querschnitt. Der U-förmige Querschnitt stellt auf vorteilhafte Weise eine einfache Konstruktion mit einem besonders geringen Raumbedarf bereit. Das Gehäuseelement kann eine erste Seitenfläche haben. Weiter kann das Gehäuseelement eine zweite Seitenfläche haben. Die erste Seitenfläche und die zweite Seitenfläche können senkrecht zu einer Drehachse der Bremsscheibe verlaufen. Die erste Seitenfläche kann einer Radnabe der Scheibenbremse zugewandt sein, an welcher die Bremsscheibe drehfest lagerbar ist, und eine nicht durch den Bremssattel umgriffene, der Radnabe zugewandte Fläche der Bremsscheibe umgreifen. Die zweite Seitenfläche kann einer Radaufhängung zugewandt sein, und eine nicht durch den Bremssattel umgriffene, der Radaufhängung zugewandte Fläche der Bremsscheibe umgreifen. Weiter kann das Gehäuseelement eine Umlauffläche haben. Die Umlauffläche kann eine radiale Außenkante der Bremsscheibe umgreifen.

Gemäß einer weiteren bevorzugten Ausführungsform ist die Luftauslassöffnung auf einer ersten Seitenfläche der Bremssattelanordnung angeordnet. In einer alternativen Ausführungsform ist die Luftauslassöffnung auf einer zweiten Seitenfläche der Bremssattelanordnung angeordnet. Vorzugsweise können mehrere Luftauslassöffnungen vorgesehen sein. Es ist denkbar, dass mehrere Luftauslassöffnungen auf einer ersten und einer zweiten Seitenfläche der Bremssattelanordnung angeordnet sein können. Insbesondere ist die Luftauslassöffnung als Aussparung ausgebildet. Die Aussparung kann vorzugsweise kreisförmig ausgebildet sein. Vorzugsweise können die mehreren Aussparungen entlang eines Randbereichs der Wandfläche angeordnet sein. Bei einer solchen Anordnung muss die zugeführte Luft zunächst einen großen Flächenbereich der Bremsscheibe passieren, um zu den Luftauslassöffnung zu gelangen, wodurch ein verbesserter Kühlungseffekt erzielt werden kann. Insbesondere können die Aussparungen gleichmäßig verteilt entlang eines Randbereichs der Wandfläche angeordnet sein.

Gemäß einer weiteren bevorzugten Ausführungsform ist ein Filterelement vorgesehen. Das Filterelement ist im Innenraum der Bremssattelanordnung angeordnet. Gleichzeitig oder alternativ ist das Filterelement im Bereich der Luftauslassöffnungen angeordnet. Das Filterelement kann dabei flächig ausgebildet sein. Weiter kann das Filterelement über eine gesamte Innenfläche des Innenraums angeordnet sein. Alternativ ist denkbar, dass jeweils einzelne Filterelemente jeweils nur in den Luftauslassöffnungen angeordnet werden können. Das Filterelement kann dazu ausgebildet sein, um Luft passieren zu lassen. Ebenfalls kann das Filterelement dazu ausgebildet sein, um Wasser passieren zu lassen. Gleichzeitig oder alternativ kann das Filterelement ausgebildet sein, um Bremsstaubpartikel einer definierten Größenordnung zurückzuhalten. Vorzugsweise kann das Filterelement Partikel mit einer Partikelgröße kleiner 10 µm zurückhalten. Das Filterelement kann somit verhindern, dass die Bremsstaubpartikel aus dem Innenraum der Bremssattelanordnung austreten und in die Umwelt gelangen. Das Filterelement kann austauschbar ausgeführt sein. Alternativ oder gleichzeitig kann das Filterelement reinigbar ausgeführt sein. Auf diese Weise kann eine ordnungsgemäße Funktion der Filterelemente dauerhaft sichergestellt werden. Im Falle eines nicht mehr funktionsfähigen Filterelements ist es zur Sicherstellung der Funktion darüber hinaus ausreichend, nur das Filterelement selbst zu tauschen. Dafür kann das Filterelement austauschbar sein.

Gemäß einer weiteren bevorzugten Ausführungsform ist der Luftauslassöffnung eine Sammelkammer vorgeschaltet. In einer alternativen Ausführungsform ist der Luftauslassöffnung eine Sammelkammer nachgeschaltet. Eine Sammelkammer kann auf vorteilhafte Weise den Bremsstaub aufnehmen. Die Sammelkammern können so angeordnet und ausgebildet sein, dass sich mit einem Luftstrom transportierte Bremsstaubpartikel in den Sammelkammern ablagern können. Die Sammelkammern können so ausgebildet sein, dass ein Entnehmen der Sammelkammern möglich ist. Auf diese Weise ist ein Entleeren auf einfache Weise möglich. In den Sammelkammern kann ein Filterelement vorgesehen sein.

Gemäß einer weiteren bevorzugten Ausführungsform umschließ die Bremssattelanordnung die Bremsscheibe. Insbesondere kann der von der Bremssattelanordnung bereitgestellte Innenraum die Bremsscheibe umschließen. "Umschließen" meint dabei ein "allseitiges Umschließen", das bedeutet, dass die Bremssattelanordnung bzw. der von der Bremssattelanordnung bereitgestellte Innenraum die Bremsscheibe vollständig aufnimmt oder umgibt. Alternativ oder gleichzeitig verkapselt die Bremssattelanordnung die Bremsscheibe. Insbesondere kann der von der Bremssattelanordnung bereitgestellte Innenraum die Bremsscheibe verkapseln. Unter "verkapselt" ist im Zusammenhang mit der Erfindung gemeint, dass die Bremssattelanordnung bzw. der von der Bremssattelanordnung bereitgestellte Innenraum einen hermetisch abgeschlossenen Aufnahmeraum für die Bremsscheibe bereitstellt. Durch ein vollständiges Umschließen oder Verkapseln der Bremsscheibe keine eine Abgabe von Bremsstaub an die Umgebung besonders effizient verhindert werden, insbesondere vollständig verhindert werden.

Gemäß einer weiteren bevorzugten Ausführungsform weist die Scheibenbremse eine Zuspannvorrichtung auf. Die Zuspannvorrichtung ist dazu eingerichtet, mit komprimierter Luft aus dem pneumatischen System des Nutzfahrzeugs beaufschlagt zu werden. Auf diese Weise kann das pneumatische System des Nutzfahrzeugs in vorteilhafter Weise sowohl für einen Bremsvorgang des Fahrzeugs als auch zu Kühlungszwecken der Bremsscheibe bzw. der Bremsbeläge genutzt werden. Die Zuspannvorrichtung kann Bremsbeläge aufweisen. Insbesondere kann die Zuspannvorrichtung zwei Bremsbeläge aufweisen, wobei die Bremsbeläge mit der Bremsscheibe in Reibwirkung bringbar sind, um eine Bremswirkung auf das Fahrzeug zu erzeugen. Weiter kann die Zuspannvorrichtung einen Bremskolben aufweisen. Der Kolben kann zum Erzeugen einer Druckkraft auf die im Bremssattel beweglich aufgenommenen Bremsbeläge dienen. Auf den Kolben kann ein unter Druck stehendes, pneumatisches oder hydraulisches Fluid wirken.

Gemäß einer weiteren bevorzugten Ausführungsform ist mindestens eine Düse zum Lenken der zugeführten Luft vorgesehen ist. Mehrere Düsen können zum Lenken der zugeführten Luft vorgesehen sein. Die mindestens eine oder die mehreren Düsen können vorgesehen sein, um die zugeführten Luft entlang von Führungsplatten oder Führungsflächen zu lenken. Die mindestens eine oder die mehreren Düsen können vorgesehen sein, um die zugeführte Luft in Richtung der Bremsscheibe oder der Bremsbeläge zu lenken. Insbesondere können die mindestens eine oder die mehreren Düsen vorgesehen sein, um die zugeführte Luft in Richtung der Luftauslassöffnungen zu lenken. Auf diese Weise kann die zugeführte Luft zu Kühlungszwecken gezielt in Richtung der Bremsscheibe gelenkt werden, und die durch Abrieb entstehenden Bremsstaubpartikel können kontrolliert zu den Luftauslassöffnungen bzw. zu Filterelementen gelenkt werden.

Gemäß einer weiteren bevorzugten Ausführungsform ist ein Bypass zum Reduzieren eines Bremsendrucks vorgesehen. In einer alternativen Ausführungsform ist ein zusätzliches Ventil zum Reduzieren eines Bremsendrucks vorgesehen. Insbesondere können ein Bypass und ein zusätzliches Ventil vorgesehen sein. Ein Bypass oder ein zusätzliches Ventil können vorteilhaft zum Reduzieren eines Bremsendrucks beitragen. Durch den Einsatz eines Bypasses oder eines zusätzlichen Ventils kann erreicht werden, dass die aktuellen Betätigungsdruckkreise nicht beeinträchtigt werden. Ferner kann die Scheibenbremse durch die Lufteinlassöffnung mit einem anderen und insbesondere niedrigeren Druck als die Zuspannvorrichtung zur Bremsung beaufschlagt werden.

Die Erfindung betrifft in einem weiteren Aspekt ein Nutzfahrzeug mit einer Scheibenbremse nach einer der vorstehend beschriebenen bevorzugten Ausführungsformen. Dabei kann die Scheibenbremse insbesondere eine pneumatische Scheibenbremse sein. Die Bremssattelanordnung kann dabei vorzugsweise als Festsattelbremse ausgebildet sein.

Gemäß einer bevorzugten Ausführungsform weist das Nutzfahrzeug eine Steuerung auf. Die Steuerung kann insbesondere eine elektronische Steuerung sein. Die Steuerung veranlasst, dass einem Innenraum der Scheibenbremse, der zur Aufnahme einer Bremsscheibe eingerichtet ist, im Falle eines vorbestimmten Szenarios komprimierte Luft aus einem pneumatischen System des Nutzfahrzeugs zugeführt wird. Auf diese Weise kann die Bremsscheibe effizient gekühlt werden und gleichzeitig der Verbrauch der Druckluft so gering wie möglich gehalten werden. Ein vorbestimmtes Szenario kann beispielsweise eine durch eine Route des Nutzfahrzeugs prognostizierbare Abfahrt mit einer vorbestimmten Länge (beispielsweise eine Länge von 6km), bei einem vorbestimmten Gefälle (beispielsweise ein Gefälle von 7%) und einer vorbestimmten Geschwindigkeit (beispielsweise eine Geschwindigkeit von 30 km/h) sein. In einer alternativen Ausführungsform veranlasst die Steuerung, dass einem Innenraum der Scheibenbremse, der zur Aufnahme einer Bremsscheibe eingerichtet ist, unter Berücksichtigung einer eine Temperatur der Scheibenbremse betreffende Schwellwertbedingung komprimierte Luft aus einem pneumatischen System des Nutzfahrzeugs zugeführt wird.

Gemäß einer weiteren bevorzugten Ausführungsform weist das Nutzfahrzeug einen elektrischen Luftkompressor zum Komprimieren der Luft auf. In einer alternativen Ausführungsform weist das Nutzfahrzeug einen mechanischen Luftkompressor zum Komprimieren der Luft auf. Auf diese Weise erhaltene komprimierte Luft kann besonders gut zu Kühlungszwecken genutzt werden, da hierbei ausgenutzt werden kann, dass sich die Druckluft, die beim Zuführen in den Innenraum dekomprimiert, bei der Dekompression abkühlt. Der Luftkompressor trägt somit in vorteilhafter Weise zu einer effizienten Kühlung der Bremsscheibe und der Bremsbeläge bei.

Die zur Scheibenbremse beschriebenen, bevorzugten Ausführungsformen bzw. Weiterbildungen sind zugleich auch bevorzugte Ausführungsformen des Nutzfahrzeuges. Die zum Nutzfahrzeug beschriebenen bevorzugten Ausführungsformen bzw. Weiterbildungen, welche sich auf die Scheibenbremse beziehen, sind zugleich auch bevorzugte Ausführungsformen der vorgenannten Scheibenbremse.

Die Erfindung betrifft in einem weiteren Aspekt ebenfalls die Verwendung einer Bremsscheibe, welche dazu eingerichtet ist, in einem zur Aufnahme der Bremsscheibe ausgebildeten Innenraum, und drehbar um eine durch einen Achszapfen eines Nutzfahrzeugs definierte Achse an dem Achszapfen gelagert zu werden, als Bremsscheibe in einem Bremssystem eines Nutzfahrzeugs, gemäß einer Scheibenbremse nach einer der vorstehend beschriebenen bevorzugten Ausführungsformen.

Die Verwendung weist dieselben Vorteile und bevorzugten Ausführungsformen auf, wie die Scheibenbremse und das Nutzfahrzeug, so dass zur Vermeidung von Wiederholungen auf die vorstehenden Ausführungsformen verwiesen wird.

Nachfolgend werden Ausführungsbeispiele der Erfindung unter Bezugnahme auf die beigefügten Figuren näher beschrieben. Hierbei zeigen:
- Fig. 1:: eine perspektivische Ansicht einer erfindungsgemäßen Scheibenbremse für ein Nutzfahrzeug, montiert an einem Bremssattelträger;
- Fig. 2:: eine Schnittdarstellung der Scheibenbremse nach Fig. 1;
- Fig. 3:: eine perspektivische Ansicht einer weiteren erfindungsgemäßen Scheibenbremse für ein Nutzfahrzeug, montiert an einem Bremssattelträger; und
- Fig. 4:: eine schematische Darstellung eines Nutzfahrzeugs gemäß einer Ausführungsform der Erfindung.

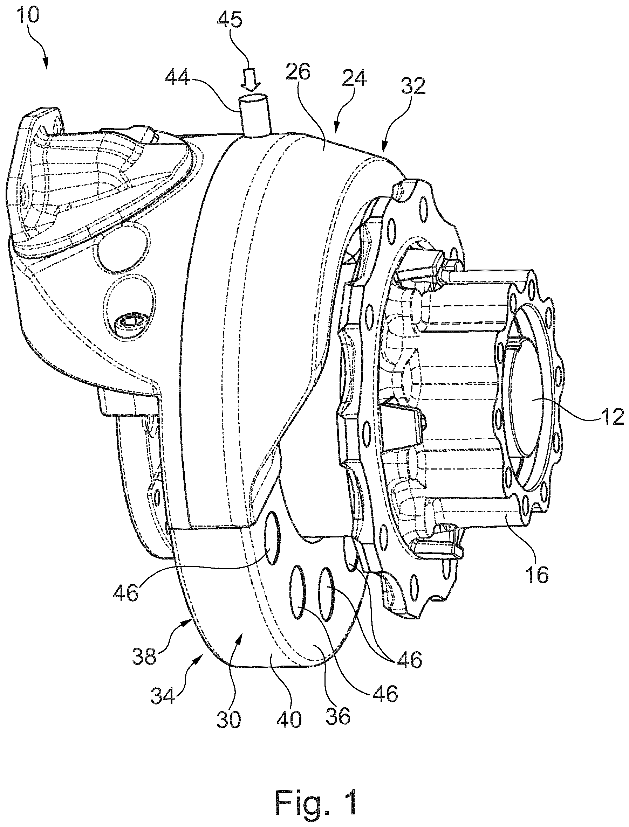

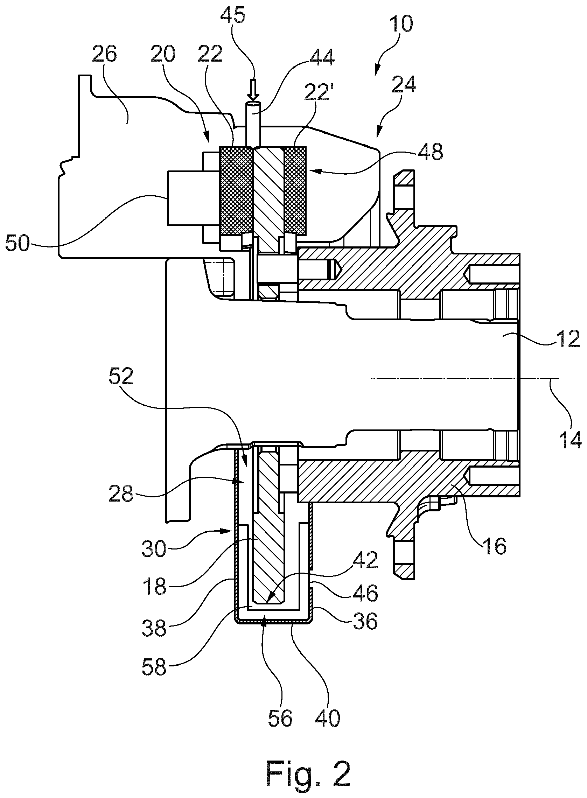

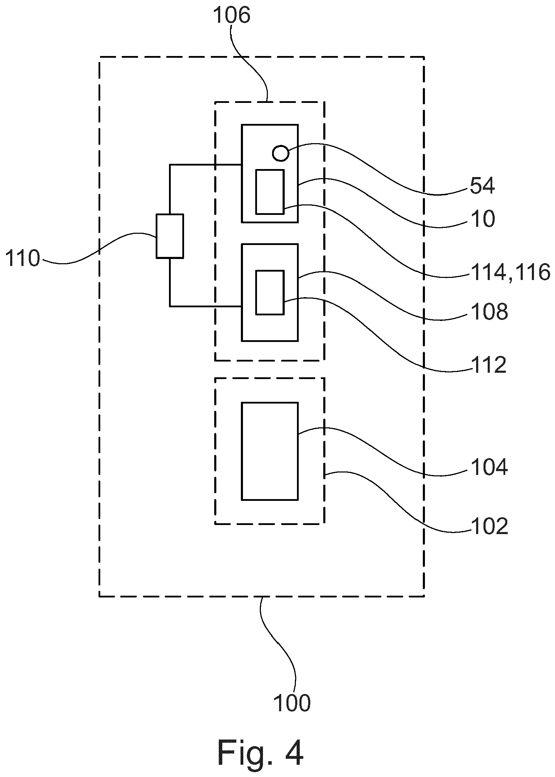

Fig. 1 zeigt eine perspektivische Ansicht einer erfindungsgemäßen Scheibenbremse 10 für ein Fahrzeug, insbesondere für ein Nutzfahrzeug 100. Die Scheibenbremse 10 ist an einem Teil des Nutzfahrzeugs 100 (Fig. 4), insbesondere an einer in der Figur nicht dargestellten Radaufhängung mit einem Achszapfen 12 angeordnet. Mittels des Achszapfens 12 ist eine Drehachse 14 (Fig. 2) definiert, um welche eine Radnabe 16 und eine Bremsscheibe 18 (Fig.2) drehbar gelagert sind. Die Radnabe 16 und die Bremsscheibe 18 sind Teil der Scheibenbremse 10. In der vorliegend gezeigten Ausführungsform ist die Bremsscheibe 18 in einer Drehrichtung drehfest an der Radnabe 16 gelagert.

Des Weiteren weist die Scheibenbremse 10 eine Zuspannvorrichtung 20 (Fig. 2) mit zwei Bremsbelägen 22, 22' auf. Die Bremsbeläge 22, 22' sind mit der Bremsscheibe 18 in Reibwirkung bringbar, um eine Bremswirkung auf das Nutzfahrzeug 100 zu erzeugen.

Des Weiteren weist die Scheibenbremse 10 in der vorliegend gezeigten Ausführungsform eine Bremssattelanordnung 24 auf. Die Bremssattelanordnung 24 weist einen Bremssattel 26 auf. Der Bremssattel 26 trägt die Bremsbeläge 22, 22'. Weiter stellt der Bremssattel 26 einen Innenraum 28 bereit (Fig.2). In dem Innenraum 28 ist die Bremsscheibe 18 angeordnet.

Die Bremssattelanordnung 24 weist in der vorliegend gezeigten Ausführungsform darüber hinaus ein Gehäuseelement 30 auf. Das Gehäuseelement 30 ist an dem

Bremssattel 26 montiert. Bei dem Ausführungsbeispiel bilden der Bremssattel 26 und das Gehäuseelement 30 gemeinsam den Innenraum 28 aus, in welchem der Bremsscheibe 18 angeordnet ist. Dabei umgreift der Bremssattel 26 einen ersten Winkelabschnitt 32 der Bremsscheibe 18, und das Gehäuseelement 30 umgreift einen weiteren Winkelabschnitt 34 der Bremsscheibe 18. Insbesondere umgreift das Gehäuseelement 30 den gesamten, nicht von dem Bremssattel 26 umgriffenen Winkelabschnitt 34 der Bremsscheibe 18.

Das Gehäuseelement 30 hat bei dem Ausführungsbeispiel einen U-förmigen Querschnitt. Dabei hat das Gehäuseelement 30 eine erste Seitenfläche 36 und eine zweite Seitenfläche 38. Weiter hat das Gehäuseelement 30 eine Umlauffläche 40. Die erste Seitenfläche 36 und die zweite Seitenfläche 38 verlaufen senkrecht zu der Drehachse 14 der Bremsscheibe 18. Die erste Seitenfläche 36 des Gehäuseelements 30 ist dabei der Radnabe 16 zugewandt, an welcher die Bremsscheibe 18 drehfest gelagert ist. Die zweite Seitenfläche 38 des Gehäuseelements 30 ist der nicht in der Figur gezeigten Radaufhängung des Nutzfahrzeugs 100 zugewandt. Die Umlauffläche 40 umgreift eine radiale Außenkante 42 (Fig. 2) der Bremsscheibe 18.

Bei dem Ausführungsbeispiel überdeckt die erste Seitenfläche 36 des Gehäuseelements 30 eine nicht durch den Bremssattel 26 überdeckte, der Radnabe 16 zugewandte Fläche der Bremsscheibe 18. Die zweite Seitenfläche 38 des Gehäuseelements 30 überdeckt eine nicht durch den Bremssattel 26 überdeckte, der in der Figur nicht dargestellten Radaufhängung zugewandte Fläche der Bremsscheibe 18.

Bei dem Ausführungsbeispiel umschließt der durch den Bremssattel 26 und das Gehäuseelement 30 ausgebildete Innenraum 28 der Bremssattelanordnung 24 die Bremsscheibe 18 somit allseits.

Die Bremssattelanordnung 24 weist darüber hinaus eine Lufteinlassöffnung 44 auf. Über die Lufteinlassöffnung 44 kann dem Innenraum 28 komprimierte Luft 45 (dargestellt durch einen Pfeil) aus einem pneumatischen System 108 (Fig. 4) des Nutzfahrzeugs 100 zugeführt werden. Bei dem Ausführungsbeispiel ist die Lufteinlassöffnung 44 als zylinderförmiger Kanal ausgebildet (in der Figur schematisch als Zylinder dargestellt). Weiter ist die Lufteinlassöffnung 44 bei dem Ausführungsbeispiel in dem Bremssattel 26 angeordnet. Insbesondere ist die Lufteinlassöffnung 44 so angeordnet ist, dass die komprimierte Luft 45 dem Innenraum 28 senkrecht zu der Drehachse 14 der Bremsscheibe 18 zugeführt wird.

Die Bremssattelanordnung 24 weist darüber hinaus mehrere Luftauslassöffnungen 46 auf, von denen in der Figur vier Luftauslassöffnungen 46 zu sehen sind. Die Lufteinlassöffnungen 44 und die Luftauslassöffnungen 46 sind durch den Innenraum 28 luftleitend verbunden. Weiter sind die Luftauslassöffnungen 46 als kreisförmige Aussparungen ausgebildet. Bei dem Ausführungsbeispiel sind die Luftauslassöffnungen 46 in dem Gehäuseelement 30 angeordnet. Insbesondere sind die Luftauslassöffnungen 46 auf der ersten Seitenfläche 36 des Gehäuseelements 30 angeordnet. In einer alternativen Ausführungsform wäre auch denkbar, dass nur eine Luftauslassöffnung 46 in dem Gehäuseelement 30 vorgesehen ist. Ebenfalls in einer alternativen Ausführungsform wäre auch denkbar, dass eine oder mehrere Luftauslassöffnungen 46 in dem Bremssattel 26 angeordnet sind.

Die Scheibenbremse 10 ist bei dem Ausführungsbeispiel als Festsattelbremse ausgebildet. Der Bremssattel 26 ist dabei an einem am Achszapfen 12 angeordneten in der Figur nicht gezeigten Bremssattelträger befestigt, insbesondere mit diesem fest verschraubt. Weiter ist der Bremssattel 26 dabei unbeweglich zu einer nicht in der Figur dargestellten Radaufhängung des Nutzfahrzeugs 100 bzw. dem Achszapfen12 gelagert.

Fig. 2 zeigt eine Schnittdarstellung der Scheibenbremse nach Figur 1. Wie Fig. 2 zeigt, ist innerhalb des Bremssattels 26 ein Aufnahmeraum 48 für die mit der Bremsscheibe 18 in Reibwirkung bringbaren Bremsbeläge 22, 22' der Zuspannvorrichtung 20 vorgesehen. Die Zuspannvorrichtung 20 weist einen Kolben 50 (schematisch dargestellt durch ein Rechteck) zum Erzeugen einer Druckkraft auf den im Bremssattel 26 beweglich aufgenommenen Bremsbelag 22, 22' auf. Auf den Kolben 50 wirkt beispielsweise ein unter Druck stehendes, pneumatisches oder hydraulisches Fluid. Bei dem Ausführungsbeispiel werden die Bremsbeläge 22, 22' der Zuspannvorrichtung 20 mit komprimierter Luft aus dem pneumatischen System 108 (Fig. 4) des Nutzfahrzeugs 100 beaufschlagt.

Wie Fig. 2 weiter zeigt, ist die Bremsscheibe 18 in dem Innenraum 28 zwischen der ersten Seitenfläche 36 und der zweiten Seitenfläche 38 des Gehäuseelements 30 angeordnet. Dabei ist ein Luftraum 52 zwischen der ersten Seitenfläche 36 des Gehäuseelements 30 und der Bremsscheibe 18 bzw. zwischen der zweiten Seitenfläche 38 des Gehäuseelements 30 und der Bremsscheibe 18 gebildet.

Bei dem Ausführungsbeispiel sind in dem Innenraum 28 mehrere, in der Figur 2 nicht dargestellte Düsen 54 (Figur 4) angeordnet. Die Düsen 54 lenken die zugeführten Luft entlang von in der Figur nicht dargestellten Führungsflächen durch den Luftraum 52 zur Bremsscheibe 18. Insbesondere lenken die Düsen 54 die zugeführte Luft in Richtung der Luftauslassöffnungen 46.

Wie aus Fig. 2 weiter ersichtlich, ist in dem Innenraum 28 der Bremssattelanordnung 24 ein Filterelement 56 angeordnet. Bei dem Ausführungsbeispiel ist das Filterelement 56 flächig ausgebildet. Weiter ist das Filterelement 56 über eine gesamte Innenfläche des Innenraums 28 angeordnet. Das Filterelement 56 ist in einer Sammelkammer 58 angeordnet. Alternativ ist denkbar, jeweils einzelne Filterelemente 56 jeweils nur in den Luftauslassöffnungen 46 anzuordnen. Bei dem Ausführungsbeispiel lässt das Filterelement 56 Luft passieren, hält jedoch Bremspartikel, die kleiner als eine definierte Partikelgröße sind, zurück.

Die Drehachse 14 ist durch eine punktgestrichene Linie schematisch illustriert.

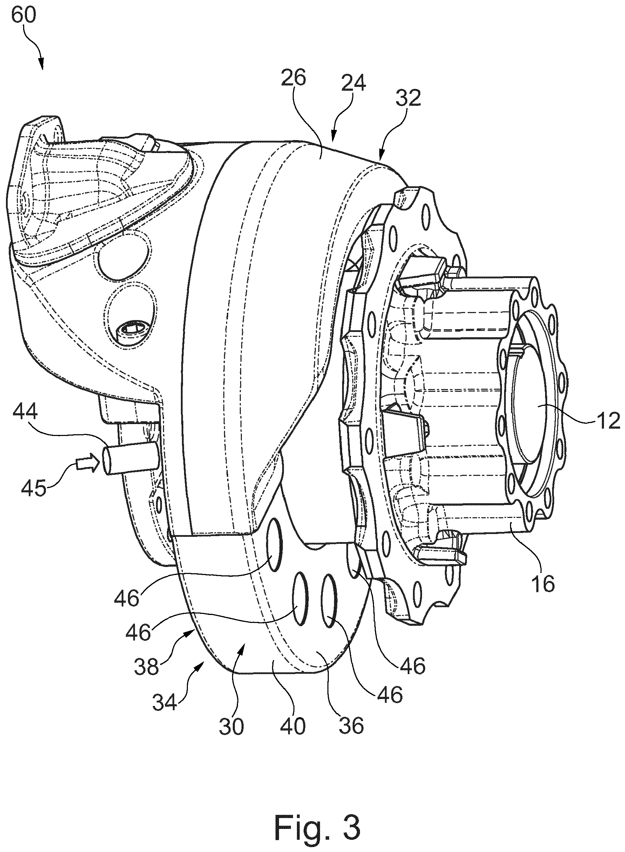

Fig. 3 zeigt eine perspektivische Ansicht einer weiteren erfindungsgemäßen Scheibenbremse 60 für ein Nutzfahrzeug 100. Die Scheibenbremse 60 entspricht hinsichtlich ihres Aufbaus und ihrer Funktionsweise im Wesentlichen der Scheibenbremse 10. Gleiche Elemente wie zuvor tragen die gleichen Bezugszeichen. Insoweit wird auch auf die vorangehende Beschreibung verwiesen. Im Vergleich mit der Scheibenbremse 10 ist die Lufteinlassöffnung 44 in dem Bremssattel 26 bei der Scheibenbremse 60 jedoch so angeordnet, dass die Luft dem Innenraum 28 axial (anstatt senkrecht) zu der Drehachse 14 der Bremsscheibe 18, also entlang einer Richtung parallel zu der Drehachse 14, zugeführt wird.

Fig. 4 zeigt eine schematische Darstellung eines Nutzfahrzeugs 100, insbesondere eines Kraftnutzfahrzeugs 100, gemäß einer bevorzugten Ausführungsform der Erfindung. Die Darstellung beschränkt sich auf die für die Erfindung wesentlichen Komponenten, wobei vorliegend verstanden werden soll, dass das Nutzfahrzeug 100 neben den abgebildeten Komponenten weitere für den Betrieb des Nutzfahrzeugs 100 erforderliche Komponenten, wie zum Beispiel einen Antriebsstrang, eine Karosserie oder eine Klimatisierungseinrichtung, aufweist. Auf die Darstellung derartiger Komponenten ist zugunsten einer knappen Wiedergabe der Erfindung verzichtet worden.

Das Nutzfahrzeug 100 weist ein Antriebssystem 102 auf, das in der vorliegenden Ausführungsform einen oder mehrere elektrische Antriebe 104 hat. Der oder die elektrischen Antriebe 104 sind dazu eingerichtet, das Nutzfahrzeug 100 antreibend zu bewegen.

Das Nutzfahrzeug 100 weist ferner ein Bremssystem 106 auf, welches mindestens eine Scheibenbremse 10 zum Verzögern der Bewegung des Nutzfahrzeuges 100 aufweist. Gemäß der vorliegenden Erfindung ist die Scheibenbremse 10 als Festsattelbremse ausgebildet und gemäß einer der voran beschriebenen bevorzugten Ausgestaltungen bzw. Ausführungsformen ausgebildet.

Das Nutzfahrzeug 100 weist ferner ein pneumatisches System 108 auf. Das pneumatische System 108 ist eingerichtet, um Luft bereitzustellen, die dem Innenraum 28 der Scheibenbremse 10, der zur Aufnahme einer Bremsscheibe 18 eingerichtet ist (Fig. 2), zugeführt wird. Bei dem Ausführungsbeispiel ist das pneumatische System 108 Teil des Bremssystems 106. Entsprechend wirkt bei dem Ausführungsbeispiel auf den Kolben 50 (Fig. 2) der Zuspannvorrichtung 20 zum Erzeugen einer Druckkraft auf die beweglich im Bremssattel 26 angeordneten Bremsbeläge 22, 22' ebenfalls ein pneumatisches Fluid aus dem pneumatische System 108 des Nutzfahrzeugs 100. Alternativ ist denkbar, dass das Bremssystem 106 und das pneumatische System 108 voneinander getrennte, separate System sind.

Wie Fig. 4 weiter zeigt, hat die Scheibenbremse 10 bei dem Ausführungsbeispiel einen Bypass 114 und ein zusätzliches Ventil 116. Der Bypass 114 und das zusätzliche Ventil 116 tragen zum Reduzieren eines Bremsendrucks bei. Darüber hinaus sind bei dem Ausführungsbeispiel in dem Innenraum 28 des Bremssattels 26 mehrere Düsen 54 zum Lenken der zugeführten Luft angeordnet, von denen in der Figur 4 zur besseren Übersicht nur eine Düse 54 schematisch dargestellt ist.

Des Weiteren weist das Nutzfahrzeug 100 gemäß einer möglichen Ausgestaltung eine Steuerung 110 auf. Bei dem Ausführungsbeispiel ist die Steuerung 110 als elektronische Steuerung 110 ausgebildet. Die Steuerung 110 ist mit dem Bremssystem 106 wirkverbunden und dazu eingerichtet, im Bedarfsfall zu veranlassen, dass dem Innenraum 28 der Scheibenbremse 10, der zur Aufnahme einer Bremsscheibe 18 eingerichtet ist (Fig. 2), komprimierte Luft aus dem pneumatischen System 108 des Nutzfahrzeugs 100 zugeführt wird. Als Bedarfsfall kann dabei beispielsweise ein vorbestimmtes Szenario oder das Überschreiten einer eine Temperatur der Scheibenbremse 10 betreffende Schwellwertbedingung angesehen werden.

Des Weiteren weist das Nutzfahrzeug 100 gemäß einer weiteren möglichen Ausgestaltung einen Luftkompressor 112 auf. Bei dem Ausführungsbeispiel ist der Luftkompressor 112 als elektrischer Luftkompressor 112 ausgebildet. Alternativ ist möglich, dass der Luftkompressor 112 als mechanischer Luftkompressor ausgebildet ist. Der Luftkompressor 112 ist zum Komprimieren der Luft aus dem pneumatischen System 108 des Nutzfahrzeugs 100 vorgesehen.

### Bezugszeichen (Teil der Beschreibung)

- 10: Scheibenbremse
- 12: Achszapfen
- 14: Drehachse
- 16: Radnabe
- 18: Bremsscheibe
- 20: Zuspannvorrichtung
- 22, 22': Bremsbeläge
- 24: Bremssattelanordnung
- 26: Bremssattel
- 28: Innenraum
- 30: Gehäuseelement
- 32: erster Winkelanschnitt
- 34: weiterer Winkelabschnitt
- 36: erste Seitenfläche
- 38: zweite Seitenfläche
- 40: Umlauffläche
- 42: radiale Außenkante
- 44: Lufteinlassöffnung
- 45: komprimierte Luft
- 46: Luftauslassöffnung
- 48: Aufnahmeraum
- 50: Kolben
- 52: Luftraum
- 54: Düsen
- 56: Filterelement
- 58: Sammelkammer
- 60: Scheibenbremse

- 100: Nutzfahrzeug
- 102: Antriebssystem
- 104: elektrischer Antrieb
- 106: Bremssystem
- 108: pneumatisches System
- 110: Steuerung
- 112: Luftkompressor
- 114: Bypass
- 116: Ventil

## Patentansprüche

1. Scheibenbremse (10, 60), insbesondere pneumatische Scheibenbremse (10, 60), für ein Nutzfahrzeug (100), aufweisend mindestens
- eine Bremsscheibe (18), und
- eine Bremssattelanordnung (24) mit einem Bremssattel (26), wobei die Bremssattelanordnung (24) einen Innenraum (28) bereitstellt, in dem die Bremsscheibe (18) angeordnet ist, und wobei die Bremssattelanordnung (24) eine Lufteinlassöffnung (44) und eine Luftauslassöffnung (46) aufweist, die durch den Innenraum (28) luftleitend verbunden sind,
**dadurch gekennzeichnet, dass** die Lufteinlassöffnung (44) eingerichtet ist, um dem Innenraum (28) komprimierte Luft (45) aus einem pneumatischen System (108) des Nutzfahrzeugs (100) zuzuführen.

2. Scheibenbremse (10, 60) nach Anspruch 1, **dadurch gekennzeichnet, dass** die Bremssattelanordnung (24) ein an dem Bremssattel (26) montiertes Gehäuseelement (30) aufweist.

3. Scheibenbremse (10, 60) nach Anspruch 2, **dadurch gekennzeichnet, dass** der Bremssattel (26) und das Gehäuseelement (30) gemeinsam den Innenraum (28) ausbilden, welcher zur Aufnahme der Bremsscheibe (18) eingerichtet ist, wobei der Bremssattel (26) einen ersten Winkelabschnitt (32) der Bremsscheibe (18) umgreift, und das Gehäuseelement (30) einen weiteren Winkelabschnitt (34) der Bremsscheibe (18) umgreift, und wobei das Gehäuseelement (30) dazu eingerichtet ist, mindestens einen gesamten, nicht von dem Bremssattel (26) umgriffenen Winkelabschnitt (34) der Bremsscheibe (18) zu umgreifen.

4. Scheibenbremse (10, 60) nach einem der Ansprüche 2 oder 3, **dadurch gekennzeichnet, dass** das Gehäuseelement (30) einen U-förmigen Querschnitt hat.

5. Scheibenbremse (10, 60) nach einem der vorherigen Ansprüche, **dadurch gekennzeichnet, dass** die Luftauslassöffnung (46) auf einer ersten Seitenfläche (36) oder auf einer zweiten Seitenfläche (38) der Bremssattelanordnung (24) angeordnet ist, wobei die Luftauslassöffnung (46) als Aussparung ausgebildet ist.

6. Scheibenbremse (10, 60) nach einem der vorherigen Ansprüche, **dadurch gekennzeichnet, dass** ein Filterelement (56) vorgesehen ist, wobei das Filterelement (56) im Innenraum (28) der Bremssattelanordnung (24) und/oder im Bereich der Luftauslassöffnungen (46) angeordnet ist.

7. Scheibenbremse (10, 60) nach einem der vorherigen Ansprüche, **dadurch gekennzeichnet, dass** der Luftauslassöffnung (46) eine Sammelkammer (58) vorgeschaltet oder nachgeschaltet ist.

8. Scheibenbremse (10, 60) nach einem der vorherigen Ansprüche, **dadurch gekennzeichnet, dass** die Bremssattelanordnung (24) die Bremsscheibe (18) umschließt und/oder verkapselt.

9. Scheibenbremse (10, 60) nach einem der vorherigen Ansprüche, **dadurch gekennzeichnet, dass** die Scheibenbremse (10, 60) eine Zuspannvorrichtung (20) aufweist, wobei die Zuspannvorrichtung (20) dazu eingerichtet ist, mit komprimierter Luft (45) aus dem pneumatischen System (108) des Nutzfahrzeugs (100) beaufschlagt zu werden.

10. Scheibenbremse (10, 60) nach einem der vorherigen Ansprüche **dadurch gekennzeichnet, dass** mindestens eine Düse (54) zum Lenken der zugeführten komprimierten Luft (45) vorgesehen ist.

11. Scheibenbremse (10, 60) nach einem der vorherigen Ansprüche, **dadurch gekennzeichnet, dass** ein Bypass (114) oder ein zusätzliches Ventil (116) zum Reduzieren eines Bremsendrucks vorgesehen ist.

12. Nutzfahrzeug (100) mit einer Scheibenbremse (10, 60) nach einem der Ansprüche 1 bis 11.

13. Nutzfahrzeug (100) nach Anspruch 12, **dadurch gekennzeichnet, dass** eine Steuerung (110) vorgesehen ist, welche veranlasst, dass einem Innenraum (28) der Scheibenbremse (10, 60), der zur Aufnahme einer Bremsscheibe (18) eingerichtet ist, im Falle eines vorbestimmten Szenarios und/oder unter Berücksichtigung einer eine Temperatur der Scheibenbremse (10, 60) betreffende Schwellwertbedingung komprimierte Luft (45) aus einem pneumatischen System (108) des Nutzfahrzeugs (100) zugeführt wird.

14. Nutzfahrzeug (100) nach Anspruch 13, **dadurch gekennzeichnet, dass** ein elektrischer oder mechanischer Luftkompressor (112) zum Komprimieren der Luft vorgesehen ist.

15. Verwendung einer Bremsscheibe (18), welche dazu eingerichtet ist, in einem zur Aufnahme der Bremsscheibe (18) ausgebildeten Innenraum (28), und drehbar um eine durch einen Achszapfen (12) eines Nutzfahrzeugs (100) definierte Achse (14) an dem Achszapfen (12) gelagert zu werden, als Bremsscheibe (18) in einem insbesondere pneumatischen Bremssystem (106) eines Nutzfahrzeugs (100), gemäß einer Scheibenbremse (10, 60) nach einem der Ansprüche 1 bis 11.
